(19) Europäisches Patentamt / European Patent Office / Office européen des brevets

(11) **EP 3 929 166 B1**

(12) **EUROPEAN PATENT SPECIFICATION**

(45) Date of publication and mention of the grant of the patent:
**04.01.2023 Bulletin 2023/01**

(21) Application number: **21179321.1**

(22) Date of filing: **14.06.2021**

(51) International Patent Classification (IPC):
*C03C 3/06* (2006.01)    *C03C 13/00* (2006.01)
*C03C 13/06* (2006.01)    *C03C 25/002* (2018.01)
*C03C 25/68* (2006.01)    *C08J 5/08* (2006.01)
*C08J 5/24* (2006.01)    *C03C 4/16* (2006.01)
*D03D 1/00* (2006.01)    *D03D 15/267* (2021.01)

(52) Cooperative Patent Classification (CPC):
**C03C 3/06; C03C 4/16; C03C 13/00; C03C 25/002; C03C 25/68; C08J 5/248; D03D 1/0082; D03D 15/267;** C03C 2213/00

(54) **ANNEALED QUARTZ GLASS CLOTH AND METHOD FOR MANUFACTURING THE SAME**

GEGLÜHTES QUARZGLASTUCH UND VERFAHREN ZUR HERSTELLUNG DAVON

TOILE EN VERRE DE QUARTZ RECUIT ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2020 JP 2020104456**

(43) Date of publication of application:
**29.12.2021 Bulletin 2021/52**

(73) Proprietor: **Shin-Etsu Chemical Co., Ltd.**
**Tokyo 100-0005 (JP)**

(72) Inventors:
• **Shiobara, Toshio**
**Tokyo (JP)**
• **Taguchi, Yusuke**
**Gunma (JP)**
• **Katsushika, Yuya**
**Gunma (JP)**
• **Nomura, Ryunosuke**
**Gunma (JP)**

(74) Representative: **Wibbelmann, Jobst**
**Wuesthoff & Wuesthoff**
**Patentanwälte PartG mbB**
**Schweigerstrasse 2**
**81541 München (DE)**

(56) References cited:
WO-A1-2019/049922    JP-A- H03 119 140
JP-A- 2004 099 377    JP-A- 2016 194 044
JP-A- 2021 063 320    US-A1- 2009 266 591

**Description**

TECHNICAL FIELD

The present invention relates to: an annealed quartz glass cloth; and a method for manufacturing the same.

BACKGROUND ART

With the development of high-speed communication, such as 5G, substrates for high-speed communication and antenna substrates have been strongly desired, the substrates having little transmission loss even when using a high frequency such as a millimeter wave. In addition, in information terminals such as smartphones, circuit boards have come to have high density mounting and to be extremely thin with remarkable progress.

A laminated plate for such a high-speed communication is widely used today. The laminated plate is achieved by laminating prepregs and curing under heat and pressure. The prepregs are obtained by impregnating a low dielectric glass cloth, such as D glass, NE glass, and L glass, with a resin that includes a thermoplastic resin such as a fluorine resin or polyphenylene ether, and further includes a thermosetting resin such as a low dielectric epoxy resin or a low dielectric maleimide resin.

It is known that a material having a smaller dielectric constant ($\varepsilon$) and dielectric loss tangent (tan$\delta$) has a more improved transmission loss of a signal, as shown by the Edward A. Wolff formula:

$$\texttt{transmission loss} \sim \texttt{(is proportional to)} \sqrt{\varepsilon} \times \texttt{tan}\delta.$$

Accordingly, such a glass cloth with improved dielectric characteristics and having different glass compositions from E glass is suggested (Patent Documents 1 to 3). However, each glass has large dielectric loss tangent of about 0.002 to 0.005 in a high frequency region of 10 G or more. When using the high frequency for communication, transmission loss becomes large, and it becomes difficult to transmit accurate information.

Although a low dielectric constant is mentioned in Patent Document 4, there is no mention of dielectric loss tangent, which contributes to transmission loss even more, and achieving low dielectric loss tangent is a difficult problem.

In addition, in Patent Document 1, a quartz glass fiber manufactured by a sol-gel method is baked to manufacture a quartz glass fiber with a water content of 1000 ppm or less. There is reference to the water content of the quartz glass fiber after the heat treatment, but there is no mention of the silanol (Si-OH) amount or the dielectric loss tangent. Since the quartz glass fiber is manufactured by a sol-gel method, the water derived from the gel and the silanol groups are not separated.

Generally, in an infrared (IR) spectroscopic analysis such as a diffused reflection IR method, the silanol group concentration is measured by making use of the infrared absorption of silanol groups at 3000 to 3700 cm$^{-1}$. In addition, it is known that the position of infrared absorption peak differs depending on the form of the silanol groups in the silica (see Patent Document 5). For this reason, regarding silanol that is present in the quartz glass in various forms, it is necessary to first specify the infrared absorption spectrum to which the silanol is assigned, and then quantify the silanol of each form by measuring the transmittance at the corresponding peak. However, infrared absorption spectrum of silanol groups in the wave number range from 3000 to 3700 cm$^{-1}$ coincides with the absorption spectrum of the hydroxy groups in water. When quantifying the silanol group concentration by the infrared absorption spectrum of silanol groups at 3000 to 3700 cm$^{-1}$, the influence of coexisting water cannot be avoided, and thus it becomes difficult to measure the silanol groups present in the quartz accurately. In particular, with regard to Patent Document 1, although a diffused reflection IR method is adopted, the water amount is determined from only the peak of silanol at 3660 cm$^{-1}$ without considering the influence of coexisting water. The water amount and the silanol amount contained in the silica glass are not distinguished, that is, the OH in silanol and the OH derived from $H_2O$ are indistinguishable.

Furthermore, Patent Document 1 discloses the relation between the water amount in a quartz glass fiber and dielectric loss tangent. However, the document contains no mention of the silanol amount, and shows only the value of the dielectric loss tangent measured for a printed substrate including a quartz glass fiber and PTFE, and therefore, the correlation between the silanol amount and the dielectric loss tangent of the glass fiber is unclear. In addition, it is disclosed that if baking is performed at 1200°C or higher, yarn strength (tensile strength) suddenly drops, but there is no description regarding strength recovery.

It is generally known that an amount of hydroxy group (OH groups) remaining in a quartz glass varies depending on manufacturing method and heat treatment, and that the difference in OH concentration brings difference in various physical properties to the quartz glass (Non Patent Document 1). However, reducing the OH amount to a predetermined amount by performing a high-temperature treatment in order to improve dielectric loss tangent is unknown. When heat-treating a hydroxy group-containing quartz glass at a high temperature, distortion is increased, particularly on the glass surface (Non Patent Document 2). This brings about greatly degraded strength of a heat-treated quartz glass. Therefore, a heat-treated quartz glass cloth (annealed quartz glass cloth) has not been put to practical use.

In addition, the present state is that strength recovery of not only a quartz glass cloth but also quartz products after a high-temperature treatment is not known at all.

The document JP H03 119140 A describes quartz glass cloths having low values of dielectric constant and dielectric loss tangent.

CITATION LIST

PATENT LITERATURE

Patent Document 1: JP H5-170483 A
Patent Document 2: JP 2009-263569 A
Patent Document 3: JP 2009-019150 A
Patent Document 4: JP 2018-197411 A
Patent Document 5: JP H2-289416 A

NON PATENT LITERATURE

Non Patent Document 1: Netsu shori ni tomonau shirika garasu chu no OH ki noudo henka (Change in OH Group Concentration in Silica Glass Accompanying Heat Treatment) February, 2011, University of Fukui, Graduate School of Engineering, Thesis for Master's Program Non Patent Document 2: Shirika garasu burokku no netsu shori niyoru kouzou henka (Structural Change in Silica Glass Block Due to Heat Treatment) February, 2005, University of Fukui, Graduate School of Engineering, Thesis for Master's Program

SUMMARY OF INVENTION

TECHNICAL PROBLEM

A low dielectric loss tangent glass cloth that satisfies both dielectric characteristics and tensile strength needed for higher-speed communication such as 5G has been unobtainable. This is a problem in conventional technologies.

The present invention has been made to solve the problem, and an object thereof is to provide: an annealed quartz glass cloth that has a low dielectric loss tangent and that is also excellent in tensile strength; and a method for manufacturing an annealed quartz glass cloth by which strength recovers after a high-temperature heat treatment.

SOLUTION TO PROBLEM

To solve the above-described problems, the present invention provides an annealed quartz glass cloth, including an $SiO_2$ content of 99.5 mass% or more, a dielectric loss tangent of less than 0.0010 at 10 GHz, and a tensile strength of 1.0 N/25 mm or more per cloth weight (g/m$^2$), that is, a tensile strength having a value of multiplying a cloth weight (g/m$^2$) and 1.0 (N/25 mm) .

Such an annealed quartz glass cloth has a low dielectric loss tangent, and is also excellent in tensile strength.

Here, the dielectric loss tangent is preferably 0.0008 or less.

The present invention can bring the dielectric loss tangent of the annealed quartz glass cloth close to the intrinsic level of quartz, and achieve a dielectric loss tangent of less than 0.0010.

Furthermore, the tensile strength is preferably 1.2 N/25 mm or more per cloth weight (g/m$^2$).

With such a tensile strength, an even higher strength can be achieved when included in a substrate or the like.

The present invention preferably has a silanol group (Si-OH) concentration of 300 ppm or less.

In this way, the annealed quartz glass cloth with a lower dielectric loss tangent can be achieved.

Furthermore, the present invention preferably has a sum total of alkali metal contents of 10 ppm or less, boron and phosphorus contents of 1 ppm or less each, and uranium and thorium contents of 0.1 ppb or less each.

Such an annealed quartz glass cloth has an extremely high purity compared with conventional quartz glass cloths, and the amount of generated radiation such as alpha rays is also extremely small. Therefore, the inventive annealed quartz glass cloth is an ideal material for preventing soft errors when included in substrates for a server or the like.

Furthermore, the inventive annealed quartz glass cloth preferably has no breakage or folding mark when bent with a mandrel with a diameter of 2.5 mm or more, or when folded by 180 degrees, in accordance with a Bend test in Testing methods for paints of JIS K 5600-5-1.

Such an annealed quartz glass cloth has low dielectric loss tangent and high tensile strength, and is also excellent in flexibility, and added value becomes higher.

In addition, the present invention provides a method for manufacturing an annealed quartz glass cloth, comprising:

heat-treating a quartz glass cloth at a temperature of 500°C to 1500°C; and

etching a surface of the heat-treated quartz glass cloth with an etching solution to give an annealed quartz glass cloth having a dielectric loss tangent of less than 0.0010 at 10 GHz, and a tensile strength of 1.0 N/25 mm or more per cloth weight ($g/m^2$).

According to such a method, strength of a quartz glass cloth can be recovered after the high-temperature heat treatment, and this certainly provides an annealed quartz glass cloth having a low dielectric loss tangent and also excellent in tensile strength.

Here, the etching solution preferably includes an aqueous solution selected from an aqueous hydrofluoric acid solution, an aqueous ammonium fluoride solution, an aqueous sodium hydroxide solution, an aqueous potassium hydroxide solution, an aqueous sodium carbonate solution, ammonia water, and alkaline electrolyzed water.

Such an etching solution is preferable for removing a strained layer of a quartz glass cloth and making strength recover.

In this case, the etching solution preferably includes a basic aqueous solution with a pH of 11 or higher, and more preferably alkaline electrolyzed water with a pH of 12 or higher.

Such etching solutions are more preferable from aspects of the effect of etching the quartz glass and improvement of tensile strength, and from aspects of working environment and wastewater treatment, alkaline electrolyzed water with a pH of 12 or higher is further preferable.

Furthermore, the step of etching is preferably performed in a continuous process.

According to such a method, the productivity of the annealed quartz glass cloth can be enhanced.

The present invention preferably further comprises, treating an etched surface of the quartz glass cloth with a coupling agent.

Coating the surface of the quartz glass cloth with a coupling agent in this manner has the advantageous effects of raising the sliding properties and wettability of glass cloth or yarn, and raising the tensile strength of the glass cloth. The adhesion between resin and the glass cloth surface can strengthen when manufacturing prepreg or the like.

ADVANTAGEOUS EFFECTS OF INVENTION

As described above, the inventive annealed quartz glass cloth has a low dielectric loss tangent and high tensile strength. This provides a substrate (e.g., for communication) by impregnating with resin. The substrate can fabricate an ideal substrate with little transmission loss. In addition, the inventive method for manufacturing an annealed quartz glass cloth can recover strength of the glass cloth by means of etching after the high-temperature heat treatment. This certainly produces the annealed quartz glass cloth that has a low dielectric loss tangent as well as excellent tensile strength, and productivity is also excellent. Furthermore, the inventive annealed quartz glass cloth is also excellent in flexibility to have a high utility value in the fields including high-speed communication.

DESCRIPTION OF EMBODIMENTS

As described above, development of a low dielectric loss tangent glass cloth that satisfies both the dielectric characteristics and the tensile strength needed for higher-speed communication has been desired.

The present inventors have earnestly studied in order to bring the dielectric loss tangent of a quartz glass cloth close to the intrinsic value of quartz, and found out that by heating and removing silanol groups remaining in the quartz contained in a quartz glass cloth at a high temperature, and further dissolving and removing a surface layer of the quartz glass filament or the like configuring the cloth, an annealed quartz glass cloth with high strength and low dielectric loss tangent can be obtained. Thus the present invention has been completed.

That is, the present invention is an annealed quartz glass cloth, which is a heat-treated quartz glass cloth, including

an $SiO_2$ content of 99.5 mass% or more, a dielectric loss tangent of less than 0.0010 at 10 GHz, and a tensile strength of 1.0 N/25 mm or more per cloth weight ($g/m^2$).

Hereinafter, the present invention will be described in detail. However, the present invention is not limited thereto.

The inventive annealed quartz glass cloth is a heat-treated (500 to 1500°C) quartz glass cloth. The glass cloth has a dielectric loss tangent of less than 0.0010 at 10 GHz, preferably a dielectric loss tangent of 0.0008 or less, more preferably 0.0005 or less, further preferably 0.0002 or less, and has a tensile strength of 1.0 N/25 mm or more per cloth weight (g/m$^2$), and preferably 1.2 N/25 mm or more per cloth weight (g/m$^2$) .

The annealed quartz glass cloth has an SiO$_2$ content of 99.5 mass% or more, and if the SiO$_2$ content is any less, a low dielectric loss tangent of quartz level is unachievable even with heat-treated.

Note that in the present invention, an annealed quartz glass cloth refers to a quartz glass cloth subjected to a heat treatment of 500°C or higher and 1500°C or lower, and the quartz glass cloth itself is specially heat-treated as described below. Therefore, the inventive annealed quartz glass cloth clearly differs from a quartz glass cloth obtained from a high-temperature process of a so-called melting method quartz glass or sol-gel method silica, where a high-temperature treatment is performed in the manufacturing process of the glass cloth itself. Hereinafter, an annealed quartz glass cloth is sometimes referred to simply as a quartz glass cloth.

In addition, as described below, the dielectric loss tangent can be measured using SPDR (Split post dielectric resonators) for measuring dielectric constant at a frequency of 10 GHz, and the tensile strength is measured in accordance with "7.4 tensile strength" of "Testing methods for textile glass products" of JIS R3420: 2013.

As a quartz glass material used for manufacturing the inventive annealed quartz glass cloth, a naturally produced quartz with little impurity, a synthetic quartz made from raw materials including silicon tetrachloride or the like can be mainly used. The main component is SiO$_2$ at 99.5 mass% or more.

The impurity concentration in the quartz glass material is more preferably as follows: a sum total of alkali metal such as Na, K, and Li of 10 ppm or less; 1 ppm or less of B (boron); 1 ppm or less of P (phosphorus); and U (uranium) and Th (thorium) contents of 0.1 ppb or less each to prevent malfunction due to radiation. Such a quartz glass material can provide an annealed quartz glass cloth having a sum total of alkali metal contents of 10 ppm or less, B and P contents of 1 ppm or less each, and U and Th contents of 0.1 ppb or less each. The concentrations of the above impurities can be measured by atomic absorption spectrophotometry, inductively coupled plasma (ICP) emission spectroscopy or the like. For example, the concentrations can be determined from a calibration curve made by using a sample with concentrations known beforehand from an apparatus such as ICP-AES and ICP-MS, etc.

The process of the inventive annealed quartz glass cloth includes making filaments, strands, or yarns from a quartz ingot obtained in the following manner as the raw material, and weaving the strands and/or the yarns.

The quartz ingot is available by the method including an electric melting method or a flame-fusion method with naturally produced quartz as a raw material; a direct synthesis method, a plasma synthesis method, or a soot method with silicon tetrachloride as a raw material; or a sol-gel method with alkyl silicate as a raw material.

For example, a quartz thread with a diameter of 100 to 300 $\mu$m that is usable in the present invention can be produced by melting an ingot at 1700 to 2300°C, extending, and winding. Since the quartz thread is stiff and does not have stretchability, it is preferable to perform a coating treatment with resin in order to prevent breakage when winding. As a coating agent, a UV curable resin having an acrylate-based functional group excellent in curability is preferable. The thickness of the coating is preferably 5 $\mu$m or more. This thickness is sufficient, and makes it possible to achieve a high reinforcement effect.

Note that in the present description, the thin thread-like filament obtained by extending the quartz thread as described above is defined as a quartz glass filament, bundled quartz glass filaments as a quartz glass strand, and bundled and further twisted quartz glass filaments as a quartz glass yarn.

In the case of a quartz glass filament, the diameter thereof is preferably 3 $\mu$m to 20 $\mu$m, more preferably 3.5 $\mu$m to 9 $\mu$m. Methods for manufacturing a quartz glass filament include the above-described extending methods by electric melting and oxyhydrogen flame using the quartz thread. However, the manufacturing methods are not limited thereto as long as the quartz glass filament diameter is 3 $\mu$m to 20 $\mu$m.

A quartz glass strand is preferably manufactured by bundling 10 to 400 of the quartz glass filaments, more preferably 40 to 200.

Furthermore, the annealed quartz glass cloth in the present invention can be manufactured by weaving the above-described quartz glass yarn and/or strand.

In the present invention, the twisting number of the quartz glass yarn is not particularly limited, but when the twisting number is small, the thickness of the cloth can be made thin easily in the opening process after forming a glass cloth, and air permeability can be easily lowered. Meanwhile, when the twisting number is large, the convergence of yarn becomes raised, and breakage and fuzz do not easily occur. The quartz glass yarn is woven into a glass cloth with the warp and weft count (density) each 10/25 mm or more, preferably 30/25 mm or more, more preferably 50/25 mm or more, and 120/25 mm or less, preferably 110/25 mm or less, and more preferably 100/25 mm or less.

There is no particular restriction to the method for weaving the quartz glass cloth, and examples include weaving by a rapier loom, a shuttle loom, an air jet loom, etc.

Generally, when manufacturing a cloth, a yarn having the filament surface coated with a sizing agent whose main component for coating is starch is used for weaving with, in order to prevent the yarn becoming fuzzy or breaking.

The sizing agent may contain components other than starch such as a cationic vinyl acetate copolymer emulsion.

Examples of the other components include a lubricant, an emulsifier, a cationic softener, an antistatic agent, a silane coupling agent, and an antiseptic. In addition, a small amount of alcohol such as methanol, ethanol, and isopropanol, or other organic solvents can add to the sizing agent for the quartz glass fiber of the present invention.

Methods for removing the sizing agent, etc. after weaving including ordinary methods such as dissolving with a solution or baking off by heating can be considered. However, a method of using a sizing agent containing a water-soluble fiber and dissolving to remove the fiber with hot water is particularly preferable. By this method, not only is the sizing agent removed, but the filaments of the strands forming the glass cloth become an expanded state, that is, opening takes place. Furthermore, unexpectedly, the presence of small spaces that appear by removing the sizing agent causes the expanded filaments to become wavy. Therefore, density is comparatively uniform even though the weight and the number of filaments are small, and a smooth cloth with small unevenness on the surface can be obtained.

In a case where heat washing such as a heat treatment is performed after weaving, removal can be performed by keeping at a temperature of 200°C or higher and lower than 500°C for 24 hours to 100 hours.

The tensile strength of the quartz glass cloth in this state is 1.0 N/25 mm or more per cloth weight $(g/m^2)$, and is sufficiently at a level where problems do not occur in handling in the subsequent step.

Currently available quartz glass cloths that can be obtained by this kind of manufacturing method have better dielectric characteristics than LE glass or the like known as low dielectric glass. However, the dielectric loss tangent is 0.0010 or more, which is a greater value than the dielectric loss tangent 0.0001 that quartz intrinsically possesses.

The present inventors have earnestly studied in order to obtain a quartz glass cloth bringing the dielectric loss tangent in a high frequency region close to the intrinsic level of quartz by a high-temperature heat treatment, while having a tensile strength of 1.0 N/25 mm or more per cloth weight $(g/m^2)$, and found out that by removing the strained layer on the surface of the fibers forming the quartz glass cloth after the high-temperature treatment, strength is remarkably enhanced.

Hereinafter, the method for manufacturing an annealed quartz glass cloth including this strained layer removal will be described in detail.

The inventive method for manufacturing an annealed quartz glass cloth includes heat-treating a quartz glass cloth at a temperature of 500°C to 1500°C; and etching a surface of the heat-treated quartz glass cloth with an etching solution to give an annealed quartz glass cloth having a dielectric loss tangent of less than 0.0010 at 10 GHz, and a tensile strength of 1.0 N/25 mm or more per cloth weight $(g/m^2)$. This manufacturing method includes, for example (1) a step of heat-treating a quartz glass cloth at a high temperature (500 to 1500°C) (heat treatment step), (2) a step of recovering a tensile strength of the heated glass cloth (strength recovery step), and if necessary, (3) a step of treating the resultant cloth surface with a coupling agent or the like (coupling agent treatment step). The heat treatment step includes heat-treating a quartz glass cloth manufactured by the above method to remove silanol groups (Si-OH) present in the quartz and to lower the dielectric constant. A strained layer on the surface of the quartz glass forms during this step. The strength recovery step includes etching the strained layer to dissolve and remove it. This enhances the tensile strength of the quartz glass cloth. In addition, the method may include other steps such as a washing, and drying step in any order as necessary.

[(1) Heat Treatment Step]

The heat treatment step is a step of heat-treating a quartz glass cloth at a high temperature. This leads the cloth to lose the silanol groups present in the quartz and have lower dielectric constant.

The heating temperature at which the silanol groups in the quartz are removed is 500°C to 1500°C, preferably 500°C to 1300°C, and more preferably 700°C to 1000°C. The heating method may include wrapping the weaved quartz glass cloth around a quartz pipe or a metal pipe, placing in an electric heating furnace, a muffle furnace, or the like, and heat-treating at 500°C to 1500°C. However, the heating method and the form of the quartz glass cloth to be heat-treated are not limited thereto.

The heat treatment time of the quartz glass cloth varies depending on the heating temperature, and for practicality, is preferably 1 minute to 72 hours, more preferably 10 minutes to 24 hours, and further preferably 1 hour to 12 hours.

Note that the heat-treated cloth can cool down slowly or rapidly to room temperature. However, the heating temperature and cooling conditions are preferably optimized since quartz glass in a molten state sometimes partially crystalizes depending on conditions.

The heating atmosphere is not particularly limited, and can be in air or in an inert gas such as nitrogen under normal or reduced pressure, or in a vacuum. However, heating is usually performed under normal pressure in air considering cost, etc.

As methods for analyzing silanol groups, various analysis methods such as a Grignard reagent method, solid $^{29}$Si-NMR, and infrared spectroscopic analysis have been studied. Each has advantages and disadvantages, and they are used appropriately. Silanol groups can be quantified by the Grignard method. Grignard reaction with silanol groups present on the quartz glass cloth surface takes place efficiently, and reproducibility is excellent. Unfortunately, there is a disadvantage that the reaction does not take place with silanol groups inside the quartz glass cloth. The infrared spectroscopic analysis can quantify the total silanol group amount on the surface and inside the quartz glass cloth, but it is difficult to distinguish the silanol groups on the surface and inside. Advantageously, this analysis can observe simply and conveniently reduction in silanol groups, and enable to observe whether the desired dielectric characteristics have been reached.

Solid $^{29}$Si-NMR has an aspect of the analysis operation having something complicated and inefficient, but is a favorable analysis method since silanol groups on the quartz glass cloth surface and inside can be quantified.

It is known that in a GHz band, dipole caused by polarization responds to an electric field, and dielectric properties appear. For this reason, reducing polarization in a structure is effective in order to achieve low dielectric characteristics in a GHz band.

The dielectric constant is represented by the following Clausius-Mossotti formula, and molecular polarizability and molar volume are factors. Accordingly, reducing polarizability, and increasing molar volume are effective in achieving a low dielectric constant.

$$\text{Dielectric constant} = [1 + 2(\Sigma Pm/\Sigma Vm)] / [1 - (\Sigma Pm/\Sigma Vm)]$$

(Pm: molecular polarizability of atomic group, Vm: molar volume of atomic group)

In addition, the dielectric loss tangent ($\tan\delta$) is a delay in dielectric response to an alternating-current electric field, and in a GHz band, the orientation relaxation of a dipole is the main factor. Accordingly, in order to reduce dielectric loss tangent, a method of eliminating the dipole (achieving a structure close to being nonpolar) can be considered.

From the above, the present invention aims to suppress the silanol group concentration, being a polar group, as an approach to reducing the dielectric characteristics of quartz glass in a GHz band.

From the above viewpoints, the silanol group (Si-OH) concentration in the quartz glass cloth after the heat treatment is preferably 300 ppm or less, preferably 250 ppm or less, and more preferably 100 ppm or less in the present invention. The silanol group concentration in the quartz glass cloth after the heat treatment is preferably low, so that the strained layer on the quartz glass surface can be dissolved and removed in the strength recovery step described below.

In this way, an annealed quartz glass cloth with an even lower dielectric loss tangent can be obtained. The silanol group (Si-OH) concentration in the annealed quartz glass cloth obtained in the end is, as described above, preferably 300 ppm or less, more preferably 250 ppm or less, and further preferably 100 ppm or less.

In the present invention, the silanol concentration in the heat-treated quartz glass cloth and the annealed quartz glass cloth are measured by solid $^{29}$Si-NMR, by which silanol groups on the quartz glass cloth surface and inside can be quantified. In this way, it is possible to determine accurately the silanol concentration that affects dielectric loss tangent. Measurement of the silanol concentration in the quartz glass by solid $^{29}$Si-NMR can be performed by a known method such as a DD (Dipolar Decoupling)/MAS (Magic Angle Spinning) method (see, for example, JP 2013-231694 A, JP 2017-3429 A).

Meanwhile, as described above, according to an infrared spectroscopic analysis such as a diffused reflection IR method, silanol groups in the sample can be sufficiently detected. Unfortunately, it is difficult to distinguish silanol groups on the surface from those inside.

In addition, liquid and powder can be easily measured by an infrared spectroscopic analysis, but a solid like a glass cloth is pulverized and formed into powder to measure. Therefore, the analysis is liable to be affected by variation due to the powder formation. Since the reduction of silanol groups and whether the desired dielectric characteristics have been reached can be confirmed simply and conveniently, this analysis is suitable for process management.

By this heat treatment step, the dielectric loss tangent of the quartz glass cloth at 10 GHz can be made less than 0.0010, preferably 0.0008 or less, more preferably 0.0005 or less, and furthermore, 0.0002 or less.

However, due to the heat treatment at a high temperature, the strength of the quartz glass cloth provided with low dielectricity is considerably lowered to 0.5 N/25 mm or less per cloth weight (g/m$^2$). Therefore, the next step, for example, a coupling agent treatment or resin impregnation for manufacturing prepreg cannot be performed in this state, and a quartz glass cloth in this state cannot be put to practical use.

Accordingly, in the present invention, the following strength recovery step is subsequently performed.

[(2) Strength Recovery Step]

Next, the quartz glass cloth-strength recovery step, which forms the fundamentals of the present invention, will be described in detail.

The strength recovery step is a step of enhancing the tensile strength of the quartz glass by dissolving and removing a strained layer formed on the quartz glass surface during the high-temperature treatment.

The present inventors have studied the degradation of strength after the heat treatment, and find that a slight distortion remains on the surface layer of a quartz glass cloth after heat-treating at a high temperature, that this becomes a starting point for easy breakage, and furthermore, that in order to recover strength, strength can be recovered by removing this strained layer.

The strained layer of the quartz glass cloth can be easily removed by immersing in an etching solution. The etching solution is not particularly limited as long as the strained layer can be removed, and includes an acid aqueous solution such as an aqueous hydrofluoric acid solution, an aqueous ammonium acid fluoride ($NH_4F \cdot HF$) solution, and an aqueous potassium acid fluoride ($KHF_2$) solution; and a basic aqueous solution selected from an aqueous ammonium fluoride solution, an aqueous sodium hydroxide solution, an aqueous potassium hydroxide solution, an aqueous sodium carbonate solution, ammonia water, and alkaline electrolyzed water. From aspects of working environment and wastewater treatment, alkaline electrolyzed water is more preferable.

The etching conditions of the quartz glass cloth after the heat treatment are not particularly limited as long as the strained layer can be removed, but the temperature is preferably room temperature (23°C) to 100°C, more preferably 40°C to 80°C. Treatment time depends on the etching speed of the quartz surface on the treatment temperature, and is therefore not particularly limited. The treatment temperature can be room temperature to 90°C, preferably 40°C to 80°C. The lower the temperature of the etching solution, the less the etching progresses, and the higher the temperature, the faster the etching speed. For practical purposes, a temperature at which the treatment can be completed in 10 minutes or more to 168 hours is preferable. The treatment time is preferably 1 hour to 72 hours, more preferably 10 hours to 24 hours. In addition, under atmospheric pressure or pressurized atmosphere, the treatment can be performed within the ranges of the above temperature and time. The pH of the etching solution is not particularly limited as long as the strained layer can be removed, and can be adjusted by adding an acid or a base, for example, as necessary.

Specifically, as a basic solution, when the pH is 8.0 or higher, the etching effect of the quartz glass is sufficient, and an improvement in tensile strength can be observed. The pH is preferably 10.0 to 13.5, more preferably 11.0 to 13.0.

As a basic etching solution, a basic aqueous solution with a pH of 11 or higher is preferably used, and more preferably, alkaline electrolyzed water with a pH of 12 or higher is used.

The etching process is not particularly limited as long as the strained layer can be removed. From the viewpoint of improving the productivity of the annealed quartz glass cloth, the etching treatment is preferably performed as a continuous process. This can be performed in the following manner.

The treatment method is to immerse a roll having a quartz glass cloth wound around a metal pipe, a quartz pipe, etc. directly in an etching tank filled with an etching solution, or to continuously immerse in a plurality of etching tanks filled with different etching solutions. Thus, the strained layer can be removed. The treatment method is not limited as long as a predetermined temperature and time are satisfied. A metal pipe or quartz pipe with a hole in the pipe can be used in order to allow smooth infiltration of the etching solution to the wound quartz glass cloth.

In addition, it is also possible to perform the etching treatment by continuously unwinding and pulling out the quartz glass cloth wound around the metal pipe or quartz pipe from the roll, and passing through the above-described etching tank for a predetermined time. For uniform etching, this method is preferable.

To perform the etching smoothly, etching can also be performed with an ultrasonic generator disposed inside the etching tank, and while transmitting ultrasonic waves and providing vibration. This is a favorable method since etching can be performed more uniformly by applying ultrasonic waves.

After the etching treatment, in the above-described roll state or while unwinding and pulling out the quartz glass cloth from the roll continuously, the etched quartz glass cloth is further washed in a washing tank of pure water, ion-exchanged water, etc. at room temperature to 100°C in order to remove impurities such as alkali metal. In a case where alkaline electrolyzed water is used as the etching solution, the washing step can be omitted.

After washing, it is preferable to heat and dry the water adhered to the quartz glass cloth for sending to the subsequent step such as a coupling agent treatment.

By performing the etching treatment, opening can also be performed at the same time.

[(3) Coupling Agent Treatment Step]

The coupling agent treatment step is a step that is performed according to necessity, and is a step of treating the quartz glass cloth surface with a coupling agent. The coupling agent is not particularly limited, but is preferably a silane coupling agent.

The surface treatment with the silane coupling agent has the effect of raising the sliding properties and wettability of a glass cloth or yarn and raising the tensile strength of the glass cloth to about 1.5 to 2.5 times as much. This is achieved by washing and drying the quartz glass cloth subjected to a high-temperature treatment and an etching treatment, and then coating the surface of the glass cloth with the silane coupling agent. In addition, this has the effect of making the adhesion between resin and the glass cloth surface strong when manufacturing prepreg, etc.

As the silane coupling agent, a known silane coupling agent can be used. Alkoxysilane is preferable, and one or more selected from a group including 3-aminopropyltrimethoxysilane, 3-aminopropyltriethoxysilane, N-2-(aminoethyl)-3-aminopropyltrimethoxysilane, N-2-(aminoethyl)-3-aminopropyltriethoxysilane, N-phenyl-3-aminopropyltrimethoxysilane, 3-methacryloxypropyltrimethoxysilane, 3-methacryloxypropyltriethoxysilane, p-styryltrimethoxysilane, and trifluoropropyl trimethoxysilane are more preferable. An amino-based alkoxysilane is further preferable.

The silane coupling agent is usually used as a diluted aqueous solution at a concentration of 0.1 mass% to 5 mass%, but it is particularly effective to use at 0.1 mass% to 1 mass%. By using the cloth according to the present invention, the silane coupling agent adheres uniformly, and brings a more uniform protection effect to the glass cloth surface so that handling becomes easy since tensile strength is enhanced. Moreover, uniform application without unevenness to resin that is used when fabricating a prepreg or the like becomes possible.

In the manner described above, the inventive annealed quartz glass cloth having a low dielectric loss tangent (less than 0.0010 at 10 GHz) and a high tensile strength (1.0 N/25 mm or more per cloth weight (g/m$^2$)) can be obtained.

Furthermore, since the inventive annealed quartz glass cloth has gone through the above-described strength recovery step, the inventive annealed quartz glass cloth is excellent not only in tensile strength, but also in flexibility (suppleness).

The inventive annealed quartz glass cloth preferably has no breakage or folding mark when bent with a mandrel with a diameter of 2.5 mm or more, or when folded by 180 degrees, in accordance with a Bend test in Testing methods for paints of JIS K 5600-5-1. Such an annealed quartz glass cloth has low dielectric loss tangent and high tensile strength, and is also excellent in flexibility, and therefore, added value becomes higher.

Note that flexibility (suppleness) can be measured according to the above-described standard, by preparing cylinders with an appropriate diameter and bending the quartz glass cloth along each cylinder, or by bending the quartz glass cloth by 180° without using a cylinder.

According to the present invention, an annealed quartz glass cloth with considerably improved dielectric loss tangent characteristics and tensile strength characteristics can be obtained by subjecting a quartz glass cloth to a high-temperature heat treatment, and then dissolving the strained layer present on the surface of the quartz glass cloth with an etching solution.

By using the inventive annealed quartz glass cloth for antennas for millimeter waves, etc. and high-speed communication substrates, application to a wide variety of uses for 5G, automatic operation, teletherapy, etc. expected to grow hereafter can be expected.

Moreover, since annealed quartz glass cloth has a far higher purity compared with conventional glass cloth, the generated amount of radiation such as alpha rays is also very small. Accordingly, substrates including quartz are ideal materials for preventing soft error by using as substrates for servers, etc. In addition, since mass production is possible, stable supply at low cost is possible.

EXAMPLE

Hereinafter, the present invention will be described further specifically with reference to Examples. However, it goes without saying that these Examples are merely shown as examples and should not be interpreted to be limiting.

Note that the tensile strength, dielectric loss tangent (tan$\delta$), silanol group content, and flexibility (suppleness) were measured in the following manner in the following Examples and Comparative Examples.

1. Measurement of tensile strength

Tensile strength was measured in accordance with "7.4 tensile strength" of "Testing methods for textile glass products" of JIS R3420: 2013.

2. Measurement of dielectric loss tangent

Dielectric loss tangent was measured using SPDR (Split post dielectric resonators) for measuring dielectric constant dielectric resonator at a frequency of 10 GHz (manufactured by Keysight Technologies).

Note that the dielectric loss tangent in the Examples and Comparative Examples indicate the dielectric loss tangent of the quartz glass cloth.

3. Measurement of silanol group content

Silanol group content was measured by solid $^{29}$Si-NMR (DD/MAS method).

4. Measurement of flexibility (suppleness)

In accordance with a Bend test in "Testing methods for paints" (cylindrical mandrel) of JIS K 5600-5-1, cylinders of Φ2.5 mm, Φ10 mm, and Φ23 mm were prepared, and a quartz glass cloth was bent along each cylinder, or a quartz glass cloth was folded by 180° without using a cylinder.

Subsequently, when each quartz glass cloth was returned to a flat state, suppleness was judged under each bending condition by whether the quartz glass cloth broke, whether there was a folding mark, or whether there was no change.

(Preparation Example 1: Production Example of Quartz Glass Cloth (SQ1))

A quartz glass thread was introduced into burner flame, and while extending, a sizing agent for quartz glass fiber was applied to fabricate a quartz glass strand from 200 quartz glass filaments with a diameter of 7.0 μm. Next, the obtained quartz glass strand was twisted by 0.2 times per 25 mm to fabricate a quartz glass yarn.

The obtained quartz glass yarn was set in an air jet loom, and a quartz glass cloth was weaved with a plain weave with a warp count (density) of 60/25 mm, and a weft count (density) of 58/25 mm. The quartz glass cloth had a thickness of 0.086 mm, and a cloth weight of 85.5 g/m$^2$.

The sizing agent for fiber was removed by heat-treating this quartz glass cloth at 400°C for 10 hours. After the removal, the quartz glass cloth had a dielectric loss tangent of 0.0011 at 10 GHz, and a tensile strength of 80 N/25 mm. Table 1 shows the basic physical properties of the quartz glass cloth described in Preparation Example.

Note that in the quartz glass cloth, the sum total of alkali metal was 0.5 ppm, P (phosphorus) was 0.1 ppm, and U and Th contents were 0.1 ppb each. The content of each element was measured by an atomic absorption method (in terms of mass).

(Preparation Example 2: Production Example of Quartz Glass Cloth (SQ2))

In the same manner as Preparation Example 1, a quartz glass strand was fabricated from 200 quartz glass filaments with a diameter of 5.0 μm. Next, the obtained quartz glass strand was twisted by 0.4 times per 25 mm to fabricate a quartz glass yarn.

The obtained quartz glass yarn was set in an air jet loom, and a quartz glass cloth was weaved with a plain weave with a warp count of 54/25 mm, and a weft count of 54/25 mm. The quartz glass cloth had a thickness of 0.045 mm, and a cloth weight of 42.5 g/m$^2$.

The sizing agent for fiber was removed by heat-treating this quartz glass cloth at 400°C for 10 hours. After the removal, the quartz glass cloth had a dielectric loss tangent of 0.0011 at 10 GHz, and a tensile strength of 35 N/25 mm. As in Preparation Example 1, Table 1 shows the basic physical properties.

(Preparation Example 3: Production Example of Quartz Glass Cloth (SQ3))

In the same manner as Preparation Example 1, a quartz glass strand was fabricated from 100 quartz glass filaments with a diameter of 5.0 μm. Next, the obtained quartz glass strand was twisted by 0.8 times per 25 mm to fabricate a quartz glass yarn.

The obtained quartz glass yarn was set in an air jet loom, and a quartz glass cloth was weaved with a plain weave with a warp count of 66/25 mm, and a weft count of 68/25 mm. The quartz glass cloth had a thickness of 0.030 mm, and a cloth weight of 26.5 g/m$^2$.

The sizing agent for fiber was removed by heat-treating this quartz glass cloth at 400°C for 10 hours. After the removal, the quartz glass cloth had a dielectric loss tangent of 0.0011 at 10 GHz, and a tensile strength of 22 N/25 mm. As in Preparation Example 1, Table 1 shows the basic physical properties.

(Example 1)

The quartz glass cloth (SQ1) with a width of 1.3 m and a length of 2000 m manufactured in Preparation Example 1 was wound in a roll form around a quartz pipe with holes in the pipe wall, and in this state, was placed in an electric furnace set to 700°C, and heated for 5 hours. After heating, the quartz glass cloth was cooled to room temperature over 8 hours. The dielectric loss tangent and the tensile strength of the quartz glass cloth were measured at this point.

Subsequently, alkaline electrolyzed water with a pH of 13 was introduced into an etching tank and was heated to 40°C. The above-described roll of quartz glass cloth was immersed for 48 hours in the etching tank to perform an etching treatment. An ultrasonic generator was disposed in the etching tank, and etching was performed while applying ultrasonic waves.

After etching, an etched quartz glass cloth was washed with ion-exchanged water and dried to fabricate an annealed quartz glass cloth with low dielectricity and high strength.

The annealed quartz glass cloth had a dielectric loss tangent of 0.0003 at 10 GHz, and a tensile strength of 118 N/25 mm. In addition, when the annealed quartz glass cloth was folded by 180°, no folding mark remained, and there was no breakage either. Table 2 shows the various measured physical properties (dielectric loss tangent, tensile strength, and flexibility).

(Example 2)

The quartz glass cloth (SQ1) with a width of 1.3 m and a length of 2000 m manufactured in Preparation Example 1 was wound in a roll form around a quartz pipe with holes in the pipe wall, and in this state, was placed in an electric furnace set to 500°C, and heated for 24 hours. After heating, the quartz glass cloth was cooled to room temperature over 8 hours.

Subsequently, under conditions with the etching solution, etc. changed as described in Table 2, etching and washing were performed in the same manner as Example 1, and evaluation was performed (Examples 2-1 to 2-7).

(Example 3)

The quartz glass cloth (SQ1) with a width of 1.3 m and a length of 2000 m manufactured in Preparation Example 1 was etched and washed in the same manner as Example 1 under the conditions described in Table 3, and evaluation was performed (Examples 3-1 to 3-6).

(Example 4)

The quartz glass cloth (SQ1) with a width of 1.3 m and a length of 2000 m manufactured in Preparation Example 1 was wound in a roll form around a quartz pipe with holes in the pipe wall, and in this state, was placed in an electric furnace set to 700°C, and heated for 5 hours. After heating, the quartz glass cloth was cooled to room temperature over 8 hours.

Subsequently, alkaline electrolyzed water with a pH of 13 was introduced into an etching tank and was heated to 70°C. The above-described quartz glass cloth was immersed over 24 hours while unwinding the cloth from the roll and making the cloth pass through the etching tank to perform an etching treatment. An ultrasonic generator was disposed in the etching tank, and etching was performed while applying ultrasonic waves.

After etching, the etched quartz glass cloth was continuously passed through a washing tank filled with ion-exchanged water, dried, and rewound around the quartz pipe to fabricate an annealed quartz glass cloth with low dielectricity and high strength.

The annealed quartz glass cloth had a dielectric loss tangent of 0.0001 at 10 GHz and a tensile strength of 105 N/25 mm. In addition, when the annealed quartz glass cloth was folded by 180°, no folding mark remained, and there was no breakage either.

The annealed quartz glass cloth was immersed in 0.5 mass% of a KBM-903 (product name, 3-aminopropyltrimethoxysilane manufactured by Shin-Etsu Chemical Co., Ltd.) aqueous solution for 10 minutes, and was subsequently heated and dried at 110°C for 20 minutes for surface treatment. Table 4 shows the various measured physical properties (dielectric loss tangent, tensile strength, and flexibility) including the tensile strength of the surface-treated annealed quartz glass cloth.

(Example 5)

The quartz glass cloth (SQ2) with a width of 1.3 m and a length of 2000 m manufactured in Preparation Example 2 was wound in a roll form around a quartz pipe with holes in the pipe wall, and in this state, was placed in an electric furnace set to 700°C, and heated for 5 hours. After heating, the quartz glass cloth was cooled to room temperature over 8 hours.

Subsequently, an etching treatment was performed in the same manner as Example 4 under the same conditions. Table 4 shows the various measured physical properties (dielectric loss tangent, tensile strength, and flexibility). In addition, the tensile strength of the annealed quartz glass cloth subjected to a surface treatment in the same manner is shown in Table 4.

(Example 6)

The quartz glass cloth (SQ3) with a width of 1.3 m and a length of 2000 m manufactured in Preparation Example 3 was wound in a roll form around a quartz pipe with holes in the pipe wall, and in this state, was placed in an electric furnace set to 700°C, and heated for 5 hours. After heating, the quartz glass cloth was cooled to room temperature over 8 hours.

Subsequently, an etching treatment was performed in the same manner as Example 4 under the same conditions. Table 4 shows the various measured physical properties (dielectric loss tangent, tensile strength, and flexibility). In addition, the tensile strength of the annealed quartz glass cloth subjected to a surface treatment in the same manner is shown in Table 4.

(Comparative Example 1)

The quartz glass cloth (SQ1) with a width of 1.3 m and a length of 2000 m manufactured in Preparation Example 1 was wound in a roll form around a quartz pipe with holes in the pipe wall, and in this state, was placed in an electric furnace set to 700°C, and heated for 5 hours. After heating, the quartz glass cloth was cooled to room temperature over 8 hours.

The dielectric loss tangent of this quartz glass cloth at 10 GHz was reduced, and was 0.0002, but the tensile strength of this was 39 N/25 mm.

Regarding flexibility, when the quartz glass cloth was bent by 180°, the quartz glass cloth broke. Furthermore, when wound around a Φ2.5 mm cylinder, a crack appeared in a part of the cloth.

(Comparative Example 2)

The quartz glass cloth (SQ1) with a width of 1.3 m and a length of 2000 m manufactured in Preparation Example 1 was wound in a roll form around a quartz pipe with holes in the pipe wall, and in this state, was placed in an electric furnace set to 1600°C, and heated for 1 hour. After heating, the quartz glass cloth was cooled to room temperature over 8 hours.

The quartz glass cloth after the heat treatment became partly fused, and it was not possible to take it out as a cloth.

The basic physical properties of the fabricated quartz glass cloths (SQ1 to 3) are shown in Table 1, the results of Examples 1 and 2 in Table 2, Example 3 in Table 3, and Examples 4 to 6 and Comparative Examples 1 and 2 in Table 4.

Note that the flexibility in the following Tables is represented by "Good" when there was no breakage or folding mark, "Poor" when there was a folding mark or a partial breakage, and "Bad" when the cloth broke.

[Table 1]

| Quartz glass cloth basic physical properties | Preparation Example 1 | Preparation Example 2 | Preparation Example 3 |
|---|---|---|---|
| | SQ1 | SQ2 | SQ3 |
| Thickness (mm) | 0.086 | 0.045 | 0.03 |
| Cloth weight (g/m²) | 85.5 | 42.5 | 26.5 |
| Dielectric loss tangent at 10 GHz | 0.0011 | 0.0011 | 0.0011 |
| Tensile strength (N/25 mm) | 80 | 35 | 22 |
| Tensile strength (N/25 mm) per cloth weight (g/m²) | 0.94 | 0.82 | 0.83 |

[Table 2]

| | | Example 1 | Example 2 | | | | | | | |
|---|---|---|---|---|---|---|---|---|---|---|
| | | | 2-1 | 2-2 | 2-3 | 2-4 | 2-5 | 2-6 | 2-7 | |
| Aqueous etching solution | | Alkaline electrolyzed water | Hydrofluoric acid (5%) | Ammonium fluoride | Ammonia water | Sodium hydroxide | Potassium hydroxide | Sodium carbonate | Alkaline electrolyzed water | |
| pH of etching solution | | 13 | 2 | 13 | 12 | 11 | 10 | 9 | 13 | |
| Heat treatment | Heating temperature (°C) | 700 | 500 | 500 | 500 | 500 | 500 | 500 | 500 | |
| | Heating time (hr) | 5 | 24 | 24 | 24 | 24 | 24 | 24 | 24 | |
| | Dielectric loss tangent after heat treatment at 10 GHz | 0.0002 | 0.0007 | 0.0007 | 0.0007 | 0.0007 | 0.0007 | 0.0007 | 0.0007 | |
| | Tensile strength after heat treatment (N/25 mm) | 39 | 43 | 43 | 43 | 43 | 43 | 43 | 43 | |
| | Tensile strength (N/25 mm) per cloth weight (g/m$^2$) | 0.46 | 0.50 | 0.50 | 0.50 | 0.50 | 0.50 | 0.50 | 0.50 | |
| Etching treatment | Treatment temperature (°C) | 40 | 23 | 40 | 40 | 40 | 40 | 40 | 40 | |
| | Treatment time (hr) | 48 | 1 | 48 | 72 | 72 | 72 | 168 | 48 | |
| | Dielectric loss tangent (10 GHz) | 0.0003 | 0.0006 | 0.0006 | 0.0005 | 0.0006 | 0.0006 | 0.0007 | 0.0006 | |
| | Tensile strength after treatment (N/25 mm) | 118 | 121 | 94 | 102 | 92 | 90 | 87 | 125 | |
| | Tensile strength (N/25 mm) per cloth weight (g/m$^2$) | 1.38 | 1. 42 | 1.1 | 1. 19 | 1.08 | 1. 05 | 1. 02 | 1.46 | |
| | Silanol groups (ppm) | 230 | 285 | 285 | 265 | 285 | 285 | 290 | 285 | |

(continued)

| | | Example 1 | Example 2 | | | | | | |
|---|---|---|---|---|---|---|---|---|---|
| | | | 2-1 | 2-2 | 2-3 | 2-4 | 2-5 | 2-6 | 2-7 |
| Flexibility | 180° bending | Good | Good | Good | Good | Good | Good | Good | Good |
| | $\phi$2.5 mm | Good | Good | Good | Good | Good | Good | Good | Good |
| | $\phi$10 mm | Good | Good | Good | Good | Good | Good | Good | Good |
| | $\phi$23 mm | Good | Good | Good | Good | Good | Good | Good | Good |

[Table 3]

| | | Example 3 | | | | | |
|---|---|---|---|---|---|---|---|
| | | 3-1 | 3-2 | 3-3 | 3-4 | 3-5 | 3-6 |
| Aqueous etching solution | | Alkaline electrolyzed water | Alkaline electrolyzed water | Alkaline electrolyzed water | Alkaline electrolyzed water | Alkaline electrolyzed water | Alkaline electrolyzed water |
| pH of etching solution | | 13 | 13 | 13 | 13 | 13 | 13 |
| Heat treatment | Heating temperature (°C) | 700 | 700 | 700 | 700 | 1100 | 1300 |
| | Heating time (hr) | 10 | 10 | 10 | 10 | 10 | 1 |
| | Dielectric loss tangent after heat treatment at 10 GHz | 0.0002 | 0.0002 | 0.0002 | 0.0002 | 0.0002 | 0.0002 |
| | Tensile strength after heat treatment (N/25 mm) | 35 | 35 | 35 | 35 | 22 | 20 |
| | Tensile strength (N/25 mm) per cloth weight (g/m$^2$) | 0.41 | 0.41 | 0.41 | 0.41 | 0.26 | 0.23 |
| Etching treatment | Treatment temperature (°C) | 40 | 40 | 60 | 70 | 70 | 70 |
| | Treatment time (hr) | 48 | 24 | 24 | 24 | 24 | 24 |
| | Dielectric loss tangent at 10 GHz | 0.0002 | 0.0002 | 0.0001 | 0.0001 | 0.0002 | 0.0002 |
| | Tensile strength after treatment (N/25 mm) | 103 | 101 | 110 | 105 | 89 | 87 |
| | Tensile strength (N/25 mm) per cloth weight (g/m$^2$) | 1.2 | 1. 18 | 1.29 | 1.23 | 1. 04 | 1.02 |
| | Silanol groups (ppm) | 220 | 220 | 200 | 200 | 195 | 180 |
| Flexibility | 180° bending | Good | Good | Good | Good | Good | Good |
| | $\phi$2.5 mm | Good | Good | Good | Good | Good | Good |
| | $\phi$10 mm | Good | Good | Good | Good | Good | Good |
| | $\phi$23 mm | Good | Good | Good | Good | Good | Good |

[Table 4]

| | | Example 4 | Example 5 | Example 6 | Comparative Example 1 | Comparative Example 2 |
|---|---|---|---|---|---|---|
| Type of quartz glass cloth | | SQ1 | SQ2 | SQ3 | SQ1 | SQ1 |
| Aqueous etching solution | | Alkaline electrolyzed water | Alkaline electrolyzed water | Alkaline electrolyzed water | - | - |
| pH of etching solution | | 13 | 13 | 13 | - | - |
| Heat treatment | Heating temperature (°C) | 700 | 700 | 700 | 700 | 1600 |
| | Heating time (hr) | 5 | 5 | 5 | 5 | 1 |
| | Dielectric loss tangent after heat treatment at 10 GHz | 0.0002 | 0.0002 | 0.0002 | 0.0002 | - |
| | Tensile strength after heat treatment (N/25 mm) | 36 | 14 | 9 | 39 | - |
| | Tensile strength (N/ 25 mm) per cloth weight (g/m$^2$) | 0. 42 | 0.33 | 0.34 | 0.46 | - |
| Etching treatment | Treatment temperature (°C) | 70 | 70 | 70 | - | - |
| | Treatment time (hr) | 24 | 24 | 24 | - | - |
| | Dielectric loss tangent at 10 GHz | 0.0001 | 0.0001 | 0.0001 | - | - |
| | Tensile strength after treatment (N/ 25 mm) | 105 | 59 | 32 | - | - |
| | Tensile strength (N/ 25 mm) per cloth weight (g/m$^2$) | 1.23 | 1.39 | 1.21 | - | - |
| | Silanol groups (ppm) | 210 | 220 | 225 | - | - |
| Silane coupling agent treatment | Tensile strength after treatment (N/ 25 mm) | 214 | 120 | 79 | - | - |
| | Tensile strength (N/ 25 mm) per cloth weight (g/m$^2$) | 2.5 | 2.82 | 2.98 | - | - |
| Flexibility | 180° bending | Good | Good | Good | Bad | - |
| | $\phi$2.5 mm | Good | Good | Good | Poor | - |
| | $\phi$10 mm | Good | Good | Good | - | - |
| | $\phi$23 mm | Good | Good | Good | - | - |

As clearly shown in the results of Tables 1 to 4, the inventive annealed quartz glass cloth has low dielectric loss tangent and is also excellent in tensile strength. Furthermore, the annealed quartz glass cloths of Examples 1 to 6 had no breakage or folding mark in the 180° bend test, and had excellent flexibility. By performing an etching treatment by which strength is recovered after the high-temperature heat treatment as in the present invention, a quartz glass cloth that has both excellent tensile strength and flexibility while maintaining low dielectric loss tangent can be obtained. In particular, when the surface of the etched quartz glass cloth is further treated with a coupling agent, the sliding properties and wettability of the glass cloth or yarn can be enhanced, and the tensile strength of the glass cloth is raised to about 2 to 2.5 times (2.5 N/25 mm or more per cloth weight ($g/m^2$)) compared with before the coupling agent treatment.

On the other hand, in Comparative Example 1, where only the high-temperature heat treatment was performed and no etching treatment was performed, the resultant cloth has low dielectric loss tangent, but the low tensile strength and no flexibility, and this was not up to practical use. Meanwhile, in Comparative Example 2, the heat treatment temperature was too high, so that it was not even possible to produce as a cloth.

In this manner, the inventive annealed quartz glass cloth has low dielectric loss tangent, and excellent tensile strength and flexibility by performing an etching treatment that recovers strength after the high-temperature heat treatment. Furthermore, by performing a coupling agent treatment, the effect of strengthening the adhesion between resin and the glass cloth surface when manufacturing prepreg, etc. together with the effect of enhancing the tensile strength of the glass cloth make it possible to obtain a substrate having excellent characteristics. This quartz glass cloth satisfies both the dielectric characteristics and the tensile strength demanded with higher-speed communication, such as 5G, and has a high utility value in fields including high-speed communication, where there are such demands.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

**Claims**

1.   An annealed quartz glass cloth, comprising
an $SiO_2$ content of 99.5 mass% or more, a dielectric loss tangent of less than 0.0010 at 10 GHz, and a tensile strength of 1.0 N/25 mm or more per cloth weight ($g/m^2$).

2.   The annealed quartz glass cloth according to claim 1, wherein the dielectric loss tangent is 0.0008 or less.

3.   The annealed quartz glass cloth according to claim 1 or 2, wherein the tensile strength is 1.2 N/25 mm or more per cloth weight ($g/m^2$).

4.   The annealed quartz glass cloth according to any one of claims 1 to 3, having a silanol group (Si-OH) concentration of 300 ppm or less.

5.   The annealed quartz glass cloth according to any one of claims 1 to 4, having a sum total of alkali metal contents of 10 ppm or less, boron and phosphorus contents of 1 ppm or less each, and uranium and thorium contents of 0.1 ppb or less each.

6.   The annealed quartz glass cloth according to any one of claims 1 to 5, having no breakage or folding mark when bent with a mandrel with a diameter of 2.5 mm or more, or when folded by 180 degrees, in accordance with a Bend test in Testing methods for paints of JIS K 5600-5-1.

7.   A method for manufacturing an annealed quartz glass cloth, comprising:

heat-treating a quartz glass cloth at a temperature of 500°C to 1500°C; and
etching a surface of the heat-treated quartz glass cloth with an etching solution to give an annealed quartz glass cloth having a dielectric loss tangent of less than 0.0010 at 10 GHz, and a tensile strength of 1.0 N/25 mm or more per cloth weight ($g/m^2$).

8.   The method for manufacturing an annealed quartz glass cloth according to claim 7, wherein the etching solution comprises an aqueous solution selected from an aqueous hydrofluoric acid solution, an aqueous ammonium fluoride solution, an aqueous sodium hydroxide solution, an aqueous potassium hydroxide solution, an aqueous sodium carbonate solution, ammonia water, and alkaline electrolyzed water.

9.   The method for manufacturing an annealed quartz glass cloth according to claim 7 or 8, wherein the etching solution comprises a basic aqueous solution with a pH of 11 or higher.

10. The method for manufacturing an annealed quartz glass cloth according to claim 9, wherein the basic aqueous solution comprises alkaline electrolyzed water with a pH of 12 or higher.

11. The method for manufacturing an annealed quartz glass cloth according to any one of claims 7 to 10, wherein the step of etching is performed in a continuous process.

12. The method for manufacturing an annealed quartz glass cloth according to any one of claims 7 to 11, further comprising, treating an etched surface of the quartz glass cloth with a coupling agent.

**Patentansprüche**

1. Geglühtes Quarzglasgewebe, umfassend
   einen $SiO_2$ -Gehalt von 99,5 Masse-% oder mehr, einen dielektrischen Verlusttangens von weniger als 0,0010 bei 10 GHz und eine Zugfestigkeit von 1,0 N/25 mm oder mehr pro Gewebegewicht ($g/m^2$ ) .

2. Geglühtes Quarzglasgewebe nach Anspruch 1, wobei der dielektrische Verlusttangens 0,0008 oder weniger beträgt.

3. Geglühtes Quarzglasgewebe nach Anspruch 1 oder 2, wobei die Zugfestigkeit 1,2 N/25 mm oder mehr beträgt pro Gewebegewicht ($g/m^2$ ) .

4. Geglühtes Quarzglasgewebe nach einem der Ansprüche 1 bis 3 mit einer Konzentration an Silanolgruppen (Si-OH) von 300 ppm oder weniger.

5. Geglühtes Quarzglasgewebe nach einem der Ansprüche 1 bis 4 mit einer Summe der Alkalimetallgehalte von 10 ppm oder weniger, Bor- und Phosphorgehalte von jeweils 1 ppm oder weniger und Uran- und Thoriumgehalte von jeweils 0,1 ppb oder weniger.

6. Geglühtes Quarzglasgewebe nach einem der Ansprüche 1 bis 5, das beim Biegen mit einem Dorn mit einem Durchmesser von 2,5 mm oder mehr oder beim Falten um 180 Grad gemäß dem Biegetest in den Prüfverfahren für Farben nach JIS K 5600-5-1 keine Bruch- oder Faltmarke aufweist.

7. Verfahren zur Herstellung eines geglühten Quarzglasgewebes, umfassend:

   Wärmebehandlung eines Quarzglasgewebes bei einer Temperatur von 500°C bis 1500°C; und
   Ätzen einer Oberfläche des wärmebehandelten Quarzglasgewebes mit einer Ätzlösung, um ein getempertes Quarzglasgewebe mit einem dielektrischen Verlusttangens von weniger als 0,0010 bei 10 GHz und einer Zugfestigkeit von 1,0 N/25 mm oder mehr pro Gewebegewicht ($g/m^2$ ) zu erhalten.

8. Verfahren zur Herstellung eines geglühten Quarzglasgewebes nach Anspruch 7, wobei die Ätzlösung eine wässrige Lösung umfasst, die aus einer wässrigen Flusssäurelösung, einer wässrigen Ammoniumfluoridlösung, einer wässrigen Natriumhydroxidlösung, einer wässrigen Kaliumhydroxidlösung, einer wässrigen Natriumcarbonatlösung, Ammoniakwasser und alkalischem elektrolysiertem Wasser ausgewählt ist.

9. Verfahren zur Herstellung eines geglühten Quarzglasgewebes nach Anspruch 7 oder 8, wobei die Ätzlösung eine basische wässrige Lösung mit einem pH-Wert von 11 oder höher umfasst.

10. Verfahren zur Herstellung eines geglühten Quarzglasgewebes nach Anspruch 9, wobei die basische wässrige Lösung alkalisches elektrolysiertes Wasser mit einem pH-Wert von 12 oder höher umfasst.

11. Verfahren zur Herstellung eines geglühten Quarzglasgewebes nach einem der Ansprüche 7 bis 10, wobei der Schritt des Ätzens in einem kontinuierlichen Prozess durchgeführt wird.

12. Verfahren zur Herstellung eines geglühten Quarzglasgewebes nach einem der Ansprüche 7 bis 11, das ferner die Behandlung einer geätzten Oberfläche des Quarzglasgewebes mit einem Haftvermittler umfasst.

**Revendications**

1. Tissu de verre de quartz recuit, comprenant
une teneur en $SiO_2$ de 99,5 % en masse ou plus, une tangente de perte diélectrique inférieure à 0,0010 à 10 GHz, et une résistance à la traction de 1,0 N/25 mm ou plus par poids de tissu ($g/m^2$).

2. Tissu de verre de quartz recuit selon la revendication 1, dans lequel la tangente de perte diélectrique est de 0,0008 ou moins.

3. Tissu de verre de quartz recuit selon la revendication 1 ou 2, dans lequel la résistance à la traction est de 1,2 N/25 mm ou plus par poids de tissu ($g/m^2$).

4. Tissu de verre de quartz recuit selon l'une quelconque des revendications 1 à 3, ayant une concentration en groupes silanol (Si-OH) de 300 ppm ou moins.

5. Tissu de verre de quartz recuit selon l'une quelconque des revendications 1 à 4, ayant une somme totale de teneurs en métaux alcalins de 10 ppm ou moins, des teneurs en bore et en phosphore de 1 ppm ou moins chacune, et des teneurs en uranium et en thorium de 0,1 ppb ou moins chacune.

6. Tissu de verre de quartz recuit selon l'une quelconque des revendications 1 à 5, ne présentant aucune marque de rupture ou de pliage lorsqu'il est plié avec un mandrin d'un diamètre de 2,5 mm ou plus, ou lorsqu'il est plié de 180 degrés, conformément à un test de pliage selon les méthodes d'essai pour les peintures de la norme JIS K 5600- 5-1.

7. Procédé de fabrication d'un tissu de verre de quartz recuit, comprenant :

   le traitement thermique d'un tissu de verre de quartz à une température de 500 °C à 1 500 °C ; et
   la gravure d'une surface du tissu de verre de quartz traité thermiquement avec une solution de gravure pour donner un tissu de verre de quartz recuit ayant une tangente de perte diélectrique inférieure à 0,0010 à 10 GHz, et une résistance à la traction de 1,0 N/25 mm ou plus par poids de tissu ($g/m^2$).

8. Procédé de fabrication d'un tissu de verre de quartz recuit selon la revendication 7, dans lequel la solution de gravure comprend une solution aqueuse choisie parmi une solution aqueuse d'acide fluorhydrique, une solution aqueuse de fluorure d'ammonium, une solution aqueuse d'hydroxyde de sodium, une solution aqueuse d'hydroxyde de potassium, une solution aqueuse de carbonate de sodium, l'eau ammoniaquée et l'eau électrolysée alcaline.

9. Procédé de fabrication d'un tissu de verre de quartz recuit selon la revendication 7 ou 8, dans lequel la solution de gravure comprend une solution aqueuse basique avec un pH de 11 ou plus.

10. Procédé de fabrication d'un tissu de verre de quartz recuit selon la revendication 9, dans lequel la solution aqueuse basique comprend de l'eau électrolysée alcaline avec un pH de 12 ou plus.

11. Procédé de fabrication d'un tissu de verre de quartz recuit selon l'une quelconque des revendications 7 à 10, dans lequel l'étape de gravure est réalisée en un processus continu.

12. Procédé de fabrication d'un tissu de verre de quartz recuit selon l'une quelconque des revendications 7 à 11, comprenant en outre le traitement d'une surface gravée du tissu de verre de quartz avec un agent de couplage.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03119140 A
- JP H5170483 A
- JP 2009263569 A
- JP 2009019150 A
- JP 2018197411 A
- JP H2289416 A
- JP 2013231694 A
- JP 2017003429 A

**Non-patent literature cited in the description**

- Netsu shori ni tomonau shirika garasu chu no OH ki noudo henka (Change in OH Group Concentration in Silica Glass Accompanying Heat Treatment). Thesis for Master's Program. University of Fukui, Graduate School of Engineering, February 2011
- Shirika garasu burokku no netsu shori niyoru kouzou henka (Structural Change in Silica Glass Block Due to Heat Treatment). Thesis for Master's Program. University of Fukui, Graduate School of Engineering, February 2005